# EUROPEAN PATENT APPLICATION

(11) **EP 0 806 457 A2**
(43) Date of publication of application: **12.11.1997**
(21) Application number: 97303079.4
(22) Date of filing: 06.05.1997
(51) Int. Cl.: C09C 1/00, C09D 7/12, C09D 11/00, C08K 3/00

(54) **Gold bronze effect pigments**

(30) Priority: 07.05.1996 GB 9609507
(71) Applicant: Silberline Limited, Leven, Fife KY8 5HD (GB)
(72) Inventor: Knox, Jonathan Joseph Whistler, Pittenweem, Fife, KY10 2LE (GB)
(74) Representative: Ellis-Jones, Patrick George Armine

(57) **Abstract**

A particle of aluminium or an aluminium alloy coated with silicon oxide and manganese and/or iron oxides is provided. This particle can be obtained by reacting an aluminium particle with a source to provide a silicon oxide coating, a source of manganese and/or iron and water.

## Description

The present invention is concerned with overcoming many of the disadvantages associated with so-called "gold bronze" pigments currently used for the colouration of inks, paints and plastics. There is provided a novel process for the preparation of aluminium based pigments having a gold appearance, together with coloured compositions, such as surface coatings, prepared with such pigments.

It is well known to use metal pigments, especially in flake form, for the colouration of inks, paints and plastics. Such metal flake pigments are prepared by dry or wet ball milling finely divided, atomised metal powder in the presence of a small quantity of lubricant, typically a fatty acid, such as oleic or stearic acids. The most commonly used metals are aluminium, for silver colouration, and gold bronze, an alloy of copper and zinc, for gold effects. The shade of the latter is controlled by variation of the copper to zinc ratio and by heat treatment. The manufacture of both aluminium and gold bronze flakes pigments is described in Chapter 1 of "Aluminium Paint and Powder" by J.D Edwards and R.I.Wray, 3rd Edition, 1955, Reinhold Publishing Corporation. (Library of Congress Catalogue Card Number 55-6623)

Gold bronze flakes suffer several disadvantages when incorporated in application media. They are prone to tarnish oxidation of the copper or the action of aqueous acids and alkalis. They have a high specific gravity, around 8.4-8.8, depending on the copper / zinc ratio. As a result, high concentrations, often over 40%, are required for adequate opacity and metallic effect. This therefore prevents a low cost-in-use.

Because of their high specific gravity, gold bronze pigments tend to settle quickly in low viscosity liquid application media. This is a particular disadvantage in printing inks, where the ink must be frequently agitated to ensure a consistency of colour depth on the printed stock. The storage stability of such inks is also poor. Instability may be recognised by a loss of metallic brilliance or gloss with time, or it may be an unacceptable change in colour or ink viscosity. Processes are available to coat gold bronze flake pigments to improve their tarnish resistance, but they add to the product cost and do not appreciably alter the specific gravity and, in consequence, the cost in use.

One of the most serious disadvantages, however, is increasing safety concerns over gold bronze pigments due to their copper content. This is a problem which is increasing in line with concern for the environment and the increasing emphasis on recycling.

It has been kncwn for many years that physical mixtures of aluminium pigments and organic or inorganic yellow orange or brown pigments in the application medium can provide colouristic effects similar to gold bronzes. Aluminium pigments, with about one third of the specific gravity of the gold bronzes, are both resistant to settling and more economical in use. Whilst the visual effect provided by a physical mixture of aluminium flake pigment and organic or inorganic colourant may not be identical to that of gold bronze, it is sufficiently close to be acceptable in many applications. A key disadvantage of such an approach, however, is separation of the constituents on absorbent substrates, which results in an unacceptable mottled appearance. Furthermore, from the point of view of stockholding, two products must be held and blended together on each occasion there is a demand for gold effects.

It would therefore be desirable to attach the colouring agent firmly to the aluminium flake surface. In United States Patent 3,067,052 there is described such a process for depositing a brown solid, believed to be a co-deposit of finely divided, perhaps colloidal, oxides of manganese, and the type of aluminium oxide that is adherent, transparent and tough, onto the bright surfaces of aluminium powder. This is achieved through aqueous reaction of the powder with an alkali metal permanganate, optionally at elevated temperature, in the presence of acid or alkali, for a period from 1 minute to 8 hours. Although a gold colouration is obtained, the reaction is difficult to control and the shade of the product dirty and unpredictable. There is clearly oxidation of the aluminium metal under the reaction conditions, with the formation of hydrogen gas. The patent provides no guidance on how passivation of the metal to overcome this defect can be achieved.

Other known methods of attaching a colouring agent to a metal flake surface include vapour phase treatment processes such as those described in European Patent 33,457 to BASF, and chemical attachment of colouring agents to metal flake surface, as in United States Patent 5,037,475 to Showa Aluminium. Organic pigments may be incorporated with waxes or resins to encapsulate metal flakes, as described in, for example, PCT Application WO 91/04293. Many such processes require specialised equipment and are expensive to carry out to the degree of colour control and quality demanded by modern industry. A major disadvantage of coloured metallic pigments derived from attachment of organic pigments to the metal surface is the tendency for such pigments to become detached and bleed in the strong solvents habitually used in surface coatings.

It is also known in the art that so-called "effect" pigments may be created by multiple coatings on metallic flake substrates, including aluminium. The coatings formed provide a wide range of colours by a light interference mechanism. Such processes are cumbersome and expensive. They are also difficult to control. Because the colour generated is by interference, the thickness of the metal compound coating determines the shade. As this thickness is of the order of nanometres, a high degree of process control is necessary.

Accordingly, there is a need for gold coloured pigments which overcome the recited disadvantages of conventional gold bronze pigments. Such products would require stability to abrasion, i.e. the coloured surface coating does not separate from the metal substrate under the shear action normally encountered in the manufacture of surface coatings based on metal pigments. They should therefore be suitable for use in aqueous media. Stability to bleed in the strong solvents used in solvent based surface coatings is a further prerequisite.

It is also known that aluminium pigments can catalyse premature cure of UV reactive monomers in the absence of UV energy. Gold effect aluminium based pigments should desirably be free of this defect. An increasing requirement in the surface coating industry is suitability for water-based application systems. Conventional aluminium pigments are unsuitable for such media due to reaction of the aluminium surface with water, forming hydrogen gas. As well as being explosive if ignited, the gas can cause product containers to pressurise, with the attendant risk of injury from ejected lids.

The present invention overcomes the aforementioned problems by providing a controllable and reproducible process for the economical preparation of a gold coloured metal flake pigment based on aluminium. Oxidation of the aluminium metal during the process is prevented by formation of a coating of silica or a hydrated derivative thereof.

According to the present invention, there is provided a process for preparing a coloured aluminium pigment which comprises reacting an aluminium pigment with a source to provide a silica coating, a source of manganese and/or iron and water. The coloured pigment is the reaction product of a silica coated aluminium pigment and a source of manganese and/or iron compounds in a partially aqueous medium. The process may proceed by a one or two stage route. The silica coating first obtained may be reacted in a second step with the source of metal ions. Alternatively, the formation of silica and reaction with metal ions may be combined in a single stage process. In the latter case, a wider shade range of products may be obtained by control of process parameters. In contrast to prior art processes, the present invention relies on a relatively thin silica coating; typically of the order of 10-40 nm, and a thicker layer of the manganese or iron derivative. As the latter provides the colour, shade control is facilitated.

The products of the process have particularly, good resistance to solvents and to light. They also provide improved resistance to premature curing of UV reactive resins and to gas generation in water-based media. As the products do not carry the thin coating of fatty acid lubricant generally associated with conventional aluminium pigments, they are found to provide superior inter- and intra-coat adhesion in surface coatings.

Any aluminium pigment is suitable for practising the invention. Such pigments include leafing and non-leafing aluminium flake pigments and the polished, substantially spherical, atomised aluminium pigment products of our copending WO 94 / 02551. Suitable particle diameters for both flake and spherical pigments are generally 1-600µm, preferably 2-100µm, most preferably 3-30µm. The aluminium pigment may be in alloy with other metals, providing the alloy contains more than 50% aluminium. Suitable alloying metals include nickel, iron, zinc, tin, magnesium, copper and also the non-metal silicon. It must be recognised, however, that alloys containing significant quantities of other metals may alter the processing properties of the product. A high purity (i.e. > 95% w/w) aluminium is therefore preferred.

Silica coating of suitable aluminium pigments may be achieved by any of the methods well known in the art. These may involve both inorganic and organic sources of silicon. For example, in United States Patent 2,885,366 there is described in Example 14 the formation of a silica coat on aluminium flake by the action of aqueous sodium silicate and sulphuric acid solution at elevated temperature. Other alkali metal silicates, such as potassium silicate may also be used. Hydrolysis of silicon tetrachloride is a further means of generating active silica.

Silica coating may be advantageously achieved using organic silicon compounds. In the same United States Patent it is disclosed that organic silicon sources may be used to prepare "active silica", which must be reacted with the core particles, in this case aluminium flake, as soon as possible after formation.

For the purposes of the present invention, this first stage of the reaction to create the silicon oxide coating is preferably carried out in a mixture of water and an oxygenated hydrocarbon solvent. The organic solvent must be substantially incapable of reacting with the aluminium pigment during the process of the reaction. Aggressive solvents which react with the aluminium surface may cause darkening and loss of metallic effect. It will be appreciated that the optimum ratio of water to solvent will vary depending on the metal salt and the surface area of the aluminium pigment, but this can be easily determined by routine experiment. In general, the percentage by volume of water in the liquid phase will be at least 3%.

Tetramethyl silicate and silicates containing higher carbon number ligands, or mixtures of these may be used, providing solubility criteria are met. Moreover, the process has been found to be more controllable than is the case using inorganic silicon sources. Tetraethyl silicate, which has the merits of being both inexpensive and widely available, is preferred.

Solvents suitable for operation of the invention include oxygenated hydrocarbon solvents, especially those compatible with end-use application media. Amongst such solvents there may be mentioned lower alcohols such as ethanol and propanol, ketones and glycol ethers. The latter, including methoxy propanol and butoxy propanol, are preferred for their lower volatility and wide range of solvency. They should ideally have some water miscibility to facilitate the second reaction stage.

The second stage reaction, to form the gold colouration, may be carried out in any medium capable of dissolving the manganese- or iron-containing reagent. In practice, it has been found that for the performance of the invention within a realistic timescale, the reaction medium should contain a proportion of water. This is because formation of the gold colour on the metal pigment surface appears to proceed via an aqueous solution of the metal salt. The remainder of the solvent may be organic in nature, but not capable of substantial reaction with the aluminium pigment during the reaction prccess. It is an advantage of the process that the ratio of water to organic solvent and the water miscibility of that solvent can be used to control the reaction rate. Mixtures of solvents may also be appropriate for this purpose.

The nature of the species imparting gold colouration on the metal pigment surface and the means by which surface attachment is achieved are not part of the invention. It is believed, however, that metal oxide is formed within the pores of a highly vesicular silica coating on each metal particle.

The colouring agent is a salt containing manganese or iron, capable of providing a gold colouration under the conditions of the process. The metal may be present in the anionic or cationic part of the salt. Amongst suitable salts there may be mentioned permanganates, ferrates and the chlorides, sulphates, acetates and nitrates of manganese and iron. Mixtures of manganese and iron salts may also be used.

Permanganate anion, for example as potassium permanganate, is the preferred source of the manganese. It is an advantage of this material that the deep purple colour of the permanganate anion is completely discharged during the formation of the gold coating. In this way, a means of process control is afforded, all the added permanganate being readily and visibly consumed. Permanganate anion also has the advantage of producing a consistent shade over a wider concentration range in the reaction mixture, than colouration generated by an interference mechanism. This is a very desirable feature for good quality control.

The shade provided by the preferred process of the invention is close to that obtainable from conventional gold bronze flake pigments. It is a further advantage that a degree of shade control can be imparted by variation of the process conditions in a controlled manner. For example, sequential formation of the silica coating and reaction with metal ions gives the pale gold shade. Inclusion of the metal ions in the silica coating process in a so-called "one pot" process, provides browner shades, in the area known as "antique bronze".

If the colouration reaction proceeds too quickly, due to too high a concentration of reagents, the heat generated by the reaction to form the colourant may cause the reaction mixture to boil, with increased potential for reaction of the aluminium particles with any water present. Conversely, if the concentration is too low, the reaction time is extended to the detriment of the economics of the process, without compensating applicational improvements

As it is believed that the silica coats the surface of the aluminium, the quantity of silica required for the minimum effective coating thickness will be influenced by the surface area of the aluminium particles. In practice it is found that there is an optimum concentration range for the silica coated aluminium. As the coating thickness for a given quantity of silica will be dependent on the median particle diameter, or more accurately, the surface area of the aluminium pigment, it is unhelpful to quote percentage ranges w/w on metal. Rather it can be expressed as a weight of silica per square metre of aluminium surface. The surface area itself may be established by any of the methods known in the art, for example water surface coverage or by calculation provided by a modern particle size analyser.

Based on such methods, the degree of silica coating is generally from 3 x 10⁻³ to 10⁻¹ g per square metre of aluminium surface, preferably 7 x 10⁻³ to 3 x 10⁻² g/m². Concentrations near the lower end of this range are found to provide gold coloured aluminium flakes of excellent heat stability in comparison to pigments derived from heavier silica coatings. Too low a silica coating, however, can result in insufficient passivation of the aluminium surface. The colouration reaction is then unstable, with attack of the aluminium surface leading to a high rate of hydrogen gas evolution.

Too thick a silica coating is economically undesirable. It moreover reduces the opacity (hiding power) and in extreme cases the metallic appearance of the product in the application system, with an undesirable increase in cost in use. Preferably the coating has a thickness up to 40nm.

The reaction may be carried out at any desired temperature within the ability to control the rate of reaction. If the starting temperature is too low, the reaction time is unacceptably extended. Too high a reaction temperature will result in boiling of the reaction mixture, possible corrosion of the aluminium particles and a less brilliant gold colouration. In practice, a starting temperature in the range 0°C to 30°C, preferably 10°C to 20°C is generally satisfactory. During the reaction, the temperature is desirably controlled by external cooling, if required, so that it does not exceed 70°C, and preferably 50°C. In this way, the brightest, most abrasion resistant gold coloured aluminium flakes can be produced.

It is a further advantage of the present invention that both process stages may be carried out simultaneously, typically in a stirred vessel having heating and cooling means. It is only necessary that all areas of the vessel are adequately agitated to provide intimate mixing of the chemical components. Excessive shear is not desirable as some colour degradation and/or explosive hydrogen gas generation may be experienced. This is because high shear, for example generated by a high speed "dissolver", can bend and fold flake pigments. The surface area for light reflection is thereby reduced, causing a corresponding reduction in metallic brightness. Excessive shear may also remove the gold coloured coating from the flake surface by mechanical attrition. If unoxidised aluminium is thus generated, reaction with water in the reaction medium may ensue, with generation of hydrogen gas. Although the products of our WO 94 / 02551, being substantially spherical, are more resistant to high shear than are flake pigments, high shear should still be avoided to prevent removal of the gold colouration.

The products of the invention may be converted to granular form according to our European Patent No. 134,676. This allows the products to be offered commercially with all the convenience and safety advantages of the granular product form recited therein.

The products of the invention are suitable for providing gold visual effects in a wide range of applications, including paints, inks, plastics and powder coatings. In particle sizes preferred for inks, eg. from about 5-15 microns average particle diameter, the flake products are excellent substitutes for gold bronze flake pigments in both solvent and water-based liquid inks.

The invention is illustrated by reference to the following Examples.

### EXAMPLE 1

120g of paste containing 60g of silica coated aluminium flake (approx. 7% theoretical silica on aluminium by weight) in 1-methoxy-2-proponal was added to
22.8g potassium permanganate, predissolved in 288g water at 18°C.

The mix was stirred at 600 rpm with a paddle agitator for one hour, under vacuum on a Buchner funnel, and washed with excess water. The product was a viscous paste of 44% metal content, dispersible in both water and oxygen-containing hydrocarbon solvents. The temperature rise during the process was 30C° and the filtrate was colourless.

The product had a bright, metallic gold appearance and excellent substrate adhesion when printed onto coated stock as an alcohol based printing ink.

### EXAMPLE 2

To a 1 litre round bottomed flask fitted with a stirrer running at 500 rpm were added in sequence:-
400g PB29 solvent (Dow Chemical Company), a mixture of methoxy propanol and n-butoxy propanol;
100g E 666 AR aluminium flake pigment paste (Silberline Ltd.), consisting of 60% aluminium flakes of approximately 20µm average particle diameter, in a mixture of aliphatic and aromatic solvents;
22.8g potassium permanganate;
20g tetra ethyl silicate and
40g 25% aqueous ammonia solution.

All the above materials were at a temperature of 15-18°C when added. The mix was stirred at 500rpm with a paddle type agitator for five minutes, then another 20g aliquot of 25% aqueous ammonia solution was added with continued stirring. The whole was mixed for one hour, then filtered and washed with 1 litre of PB29. The temperature rise during the reaction was 15°C.

This "one pot" process produced a product with a paler gold appearance than the product of Example 1. The liquors obtained on filtration were slightly purple coloured, suggesting that reaction was incomplete.

The process of this Example may also be operated with aluminium flake pigment in PB29 solvent, rather than a mixture of hydrocarbons. The product is substantially the same.

### EXAMPLE 3

The method of Example 2 was repeated with the addition of 50g water immediately after the potassium permanganate addition. On this occasion the filtrate was colourless. The product of this Example was noticeably brighter in comparison to that of Example 2. It also had particularly good heat stability, being resistant to heating to over 500°C with little change of colour.

### EXAMPLE 4

To a 10 litre reaction vessel fitted with an anchor agitator, were added:-
1330g silica coated E 666 AR aluminium flake pigment paste (Silberline Ltd.) containing
800g metal and
3840g distilled water.
After mixing at 400 rpm for 30 mins., and at a temperature of 24°C.
304g potassium permanganate crystals
were added rapidly with continued agitation. The temperature began to rise after 2-3 minutes and continued to rise over the following 8 minutes to 61°C, before slowly falling back. The slurry was stirred for a further 2.5 hours to a temperature of 30°C, then filtered, washed with 5 litres distilled water and brought to 30% non-volatile content under vacuum. The product had a bright metallic gold colouration, stable to water, solvent bleed and light. It showed excellent adhesion to a paper substrate when formulated and printed as a water based ink.

### EXAMPLE 5

142.8g of a paste consisting of a silica coated aluminium flake pigment of 250 microns median particle size, at 70% metal in 1-methoxy-2-propanol was dispersed in 1000g distilled water and heated to 40°C. A solution of 20g iron (II) sulphate heptahydrate in 50g water was added dropwise, followed by 14g of 25% ammonia solution. The mixture was gently agitated for 20 minutes and the flakes separated by filtration, washed copiously with water and dried at 130°C. The resulting aluminium flakes, which exhibited a brilliant metallic gold colour, were incorporated in a modified polyolefin wax carrier by the process of our European Patent No. 134,676 at a metal to carrier ratio of 70 : 30. The resulting granular product gave a sparkling gold colouration when incorporated in black pigmented polystyrene at a loading of 1.5%.

### EXAMPLE 6

To a plastic beaker were added:-
20g aluminium flake pigment of approximately 20 microns average flake diameter, as used in Example 4, from which the solvent had been evaporated,
20g of a 1% aqueous nonionic surfactant solution and
30g distilled water.
After hand mixing with a spatula, there were added
12g of 1:1 water glass (sodium silicate solution; 12% Na₂O - 30% silica) : water mix.
After a further 2 mins. mixing, the slurry was added over 5 mins to
700g isopropanol, with mechanical agitation.
Next there were added over 5 mins to the stirring slurry,
3.3g of 1:1 formic acid : water .
Finally, the slurry was mixed for 30 mins before filtering, washing with excess water and drying. To
20g of this dry silica coated flake were added
200g distilled water and
8g potassium permanganate.
The resulting slurry was stirred for 6 hrs, filtered, washed and dried. The filtrate retained some purple colouration. A gold coloured product was obtained, but was not as bright as the product of Example 4, obtained from a silica coating derived from an organic silicon compound.

### EXAMPLE 7

In a glass beaker,
30g silica coated aluminium flake pigment of 16µm median particle diameter, prepared by the
inorganic silicon route,
144g distilled water and
12g potassium permanganate crystals
were mixed together for one hour, during which the temperature rose from. 18°C to 49°C. When filtered thereafter , the filtrate contained a substantial quantity of potassium permanganate. The filter cake was washed free of colouration and dried at 75°C. The product had a gold colouration but was slightly aggregated and lacked the brightness and cleanliness of shade of the product of Example 4.

## Claims

1. A particle of aluminium or an aluminium alloy coated with silicon oxide and manganese and/or iron oxides.

2. A particle according to claim 1 which has a diameter of 2 to 100µm.

3. A particle according to claim 1 or 2 which is at least 95% by weight aluminium apart from the coating.

4. A particle according to any one of the preceding claims wherein the silicon oxide is present on the aluminium flake surface in an amount from 7 x10⁻³ to 3 x 10⁻² g/m².

5. A particle according to any one of the preceding claims wherein the coating has a thickness up to 40nm.

6. A particle according to any one of the preceding claims which has a gold colour.

7. A particle according to any one of the preceding claims wherein the coating comprises an oxide of manganese.

8. A process for preparing a coloured aluminium particle which comprises reacting an aluminium particle with a source to provide a silicon oxide coating, a source of manganese and/or iron and water.

9. A process according to claim 8 wherein the source to provide a silicon oxide coating and the source of manganese and/or iron are reacted together with the aluminium particle.

10. A process according to claim 8 wherein the aluminium particle is first reacted with the silicon pxide source and subsequently with the source of manganese and/or iron.

11. A process according to any one of claims 8 to 10 wherein the source to provide a silicon oxide coating is an organic silicon compound.

12. A process according to claim 11 wherein the source to provide the silicon oxide coating is tetraethyl silicate.

13. A process according to any one of claims 8 to 12 which is carried out in the presence of an oxygenated hydrocarbon solvent.

14. A process according to claim 13 wherein the solvent is methoxy propanol or butoxy propanol.

15. A process according to any one of claims 8 to 14 wherein the source of the manganese is permanganate and the source of the iron is a chloride, sulphate, acetate or nitrate.

16. A process according to claim 15 wherein the said source is potassium permanganate.

17. A process according to any one of claims 9 to 16 wherein the source of the manganese is permanganate and the source of the iron is a sulphate, nitrate, acetate, or chloride salt.

18. A paint, ink or plastics or powder coating comprising particles as claimed in any one of claims 1 to 7.
